Europäisches Patentamt

European Patent Office

Office européen des brevets

(19)

(11) Veröffentlichungsnummer: **0 017 991**
A2

# (12) EUROPÄISCHE PATENTANMELDUNG

(21) Anmeldenummer: 80102071.0

(22) Anmeldetag: 17.04.80

(51) Int. Cl.³: **G 01 D 1/14**

(30) Priorität: 20.04.79 DE 2916158

(43) Veröffentlichungstag der Anmeldung: 29.10.80
Patentblatt 80/22

(84) Benannte Vertragsstaaten: **BE FR GB IT LU NL**

(71) Anmelder: **SIEMENS AKTIENGESELLSCHAFT Berlin
und München, Postfach 22 02 61,
D-8000 München 22 (DE)**

(72) Erfinder: **Reichel, Hilmar, Dipl.-Ing., Rudolfstrasse 1,
D-8033 Planegg (DE)**
Erfinder: **Hoogen, Karl-Heinz, Werinherstrasse 69,
D-8000 München 90 (DE)**

(54) Gerät zur Anzeige von Häufigkeitsverteilungen von Messwerten oder dgl. über einen einstellbaren Messbereich.

(57)   Die Erfindung betrifft ein Gerät zur Anzeige von Häufigkeitsverteilungen von Meßwerten oder dgl. (Histogramm) über einen einstellbaren Meßbereich, bei dem der Meßbereich in gleich große Klassen (0—14) unterteilt ist und die Klassen (0—12) fortlaufend numeriert sind, wobei die Anzahl der in jede Klasse (0—14) fallenden Meßwerte gespeichert und angezeigt wird und fallweise ausgebbar ist. Bei dem Gerät ist die Anzahl der gesamt anzuzeigenden Meßwerte vorwählbar, wobei bei jeder Überschreitung der vorgewählten Anzahl durch jeden neuen Meßwert der in der Reihenfolge älteste Meßwert löschbar ist.

EP 0 017 991 A2

SIEMENS AKTIENGESELLSCHAFT     Unser Zeichen
Berlin und München            VPA 79 P 7 0 5 5

Gerät zur Anzeige von Häufigkeitsverteilungen von Meßwerten oder dgl. über einen einstellbaren Meßbereich

Die Erfindung bezieht sich auf ein Gerät zur Anzeige
von Häufigkeitsverteilungen von Meßwerten oder dgl.
über einen einstellbaren Meßbereich, bei dem der Meßbereich in gleich große Abschnitte (Klassen) unterteilt
ist und die Abschnitte fortlaufend nummeriert sind, wobei die Anzahl der in jede Klasse fallenden Meßwerte
gespeichert und angezeigt wird und fallweise ausgebbar ist.

Ein Gerät dieser Art ist durch die Zeitschrift "Elektronik" 1978, Heft 1, S. 61-65, bekanntgeworden. Dieses
Gerät dient zur kontinuierlichen Überwachung des Pulses
von Menschen über längere Zeiträume, um Herzrhythmusstörungen feststellen zu können. Es verarbeitet die vom
Puls hergeleiteten Signale nach dem Prinzip der Häufigkeitsverteilung zu einem Histogramm. Da die Absolutwerte

Hs 1 Kow / 5.4.1979

der zeitlichen Abstände aufeinanderfolgender Impulse für die Bildung des Histogramms nicht so sehr von Interesse sind, werden nur die Schwankungen dieser Werte um einen Mittelwert erfaßt.

Die Klassierung erfolgt nach dem Zählprinzip, d.h. es wird eine Umsetzung der Größe Zeit in eine digitale Größe durch Auszählen von Impulsen eines Oszillators durchgeführt. Bei jedem Meßtaktimpuls wird diese in einem Zähler gespeicherte Größe in ein Klassierwerk übernommen, dessen Ausgangsinformation die zugehörige Klassenzuordnung bzw. Adresse repräsentiert. Die vom Klassierwerk festgestellte Adresse wird mit Hilfe des Meßtaktimpulses in einem Speicher klassenweise aufsummiert. Der Additionsvorgang erfordert mehrere Befehlsschritte, die durch eine Folge von Impulsen einer besonderen Ablaufsteuerung im Speicher durchgeführt wird. Ferner weist das bekannte Gerät eine Adressiereinheit auf, die den Speicher und eine Ausgabematrix über Adressen ansteuert. Die Speicherinformation kann auf einem Leuchtdioden-Display in Form eines Histogramms sichtbar gemacht werden. Auf dem Speicher sind Additionen solange möglich, bis in einer Klasse eine Maximalbelegung auftritt. Weitere Klassierungen werden danach blockiert. Sobald eine solche Blockierung vorliegt, können verschiedene Programme aktiviert werden. So kann ein Subtraktionsprogramm ausgelöst werden, wobei in jeder der Klassen eine Reduzierung um eins durchgeführt wird, solange mindestens ein Wert eingespeichert war. Falls die Zahl der eingespeicherten Werte von vornherein null war, unterbleibt in der entsprechenden Klasse der Subtraktionsvorgang. Dadurch werden im Verlauf mehrerer Subtraktionen die entsprechenden Histogramme um eine Stelle nach "unten" verschoben.

Ferner kann bei Blockierung des Speichers infolge erreichter Maximalbelegung einer Klasse eine automatische Schreiberausgabe in Gang gesetzt werden, wobei das Histogramm auf einen synchron gestarteten Schreiber ausgegeben wird. Anschließend wird das Histogramm gelöscht. Auf diese Weise können in gewissen Zeitabständen Kurzzeithistogramme ausgegeben werden, die Rückschlüsse auf die Dynamik der Herztätigkeit über längere Zeiträume zulassen.

Ein Gerät dieser Art ist im technischen Bereich nur beschränkt einsetzbar, weil eine genaue zeitliche statistische Verteilung nicht ohne weiteres erkennbar ist.

Der Erfindung liegt die Aufgabe zugrunde, ein Gerät der eingangs genannten Art derart weiterzubilden, daß es universell einsetzbar ist. Insbesondere soll es im technischen Bereich eingesetzt werden können, und zwar allgemein zur Überwachung von Fertigungsprozessen. Diese Aufgabe wird gemäß der Erfindung dadurch erreicht, daß die Anzahl der gesamt anzuzeigenden Meßwerte vorwählbar ist und daß bei jeder Überschreitung der vorgewählten Anzahl durch jeden neuen Meßwert der in der Reihenfolge älteste Meßwert löschbar ist. Dadurch, daß die Anzahl der gesamt anzuzeigenden Meßwerte von vorneherein beschränkt ist, ergibt sich ein gutes Erkennen der statistischen Verteilung. Dadurch, daß beim Einordnen eines neuen Meßwertes der jeweils älteste Meßwert aus dem Histogramm herausgenommen wird, kann eine Änderung der statistischen Verteilung sofort erkannt werden. Dies ist insbesondere wichtig bei der Überwachung von Fertigungsprozessen.

Die Anzahl der anzuzeigenden Meßwerte wird zweckmäßigerweise mit Hilfe eines einstellbaren Speichers vorgegeben, in welchem die Adressen der Klassen oder die Meßwerte in der Reihenfolge ihrer Ansteuerung bzw. ihres Eintreffens abgespeichert sind. Vorzugsweise wird bei vollem Speicher die Adresse der durch den nächstfolgenden Meßwert angesteuerten Klasse in den Speicher übernommen und gleichzeitig die dem ältesten Meßwert zugeordnete Klassenadresse ausgegeben, welche den Inhalt
des dieser Klasse zugeordneten Speichers korrigiert.

Anhand der Zeichnung, in der ein Ausführungsbeispiel
dargestellt ist, wird die Erfindung näher erläutert.
Es zeigen:

Figur 1 ein durch das erfindungsgemäße Anzeigegerät
        darstellbares Histogramm,
Figur 2 ein Blockschaltbild des Anzeigegerätes,
Figur 3 ein Blockschaltbild für einen Schreiberanschluß
        und
Figur 4 eine Ansicht des Gerätes.

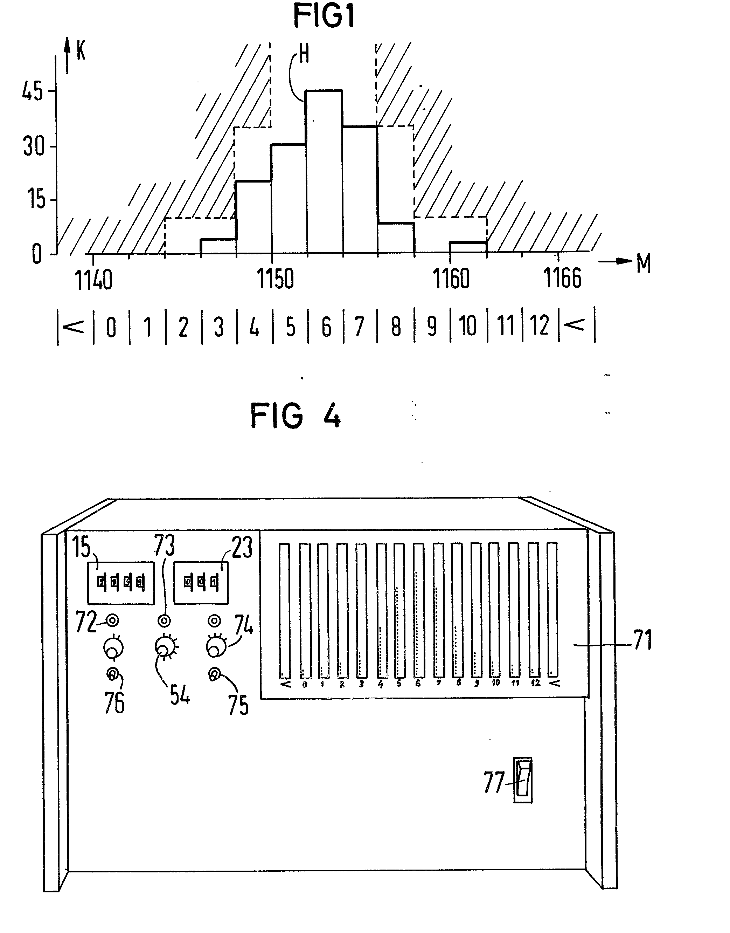

Figur 1 zeigt ein an sich bekanntes Histogramm H, wobei
in Abhängigkeit von einer beliebigen Meßgröße M die
absolute Klassenhäufigkeit K als Zahl aufgetragen ist.
Ein solches Histogramm H soll mit dem erfindungsgemäßen Gerät darstellbar sein. Bei dem gewählten Ausführungsbeispiel ist nur der Bereich von 1140 bis 1166
von Interesse. Der Klassenanfang ist daher auf die Zahl
1140 eingestellt. Dieser Bereich ist in gleich große
Klassen 0 bis 12 unterteilt. An diesem Bereich schließen
sich oben und unten zwei Bereiche an für Werte, die
nicht in die vorwählbaren Klassenintervalle 0 bis 12
fallen. Diese Bereiche sind mit den Zeichen < für
größer und kleiner gekennzeichnet. Die Anzahl der in diese
Bereiche fallenden Ereignisse werden ebenfalls angezeigt,
um u.a. das Einstellen des geeignetsten Meßbereiches zu
erleichtern.

Wie sich aus der Bezifferung gemäß Figur 1 ergibt, ist
bei dem gewählten Ausführungsbeispiel die Klassenbreite 2.

Durch entsprechendes Vorwählen des Klassenanfangs kann das Histogramm so gelegt werden, daß das Maximum der Häufigkeit in die mittleren Klassen 5 bis 7 fällt. Aus diesem Grunde ist es wichtig, daß der Klassenanfang und die Klassenbreite vorwählbar sind. Die in der Abszissenachse aufgetragene Meßgröße muß eine digitale Größe sein, d.h. jede analoge Meßgröße muß vorerst in eine digitale Größe umgesetzt werden, was an sich kein Problem darstellt.

In Figur 1 ist mit gestrichelten Linien ein Soll-Bereich der Häufigkeitsverteilung eingetragen. Für die einzelnen Klassen 0 bis 12 stellt dieser Soll-Bereich einen Grenzwert dar, der beispielsweise mit Grenzwertmeldern vorgebbar ist, wie weiter unten noch näher erläutert werden wird. Bei dem in Figur 1 dargestellten Histogramm H werden diese Grenzwerte nicht überschritten. Wird jedoch in einer der Klassen 0 bis 12 dieser Grenzwert überschritten, wird zweckmäßigerweise eine Anzeige in Betrieb gesetzt. Gegebenenfalls können damit Schalthandlungen ausgeführt werden, die so einwirken, daß der Grenzwert mit Sicherheit nicht mehr überschritten wird.

Von wesentlicher Bedeutung ist, daß zur Bildung des Histogramms nur eine ganz bestimmte Anzahl von Meßwerten bzw. Ereignissen verwendet wird, um die statistische Verteilung so auswerten zu können, daß entsprechende Rückschlüsse gezogen werden können. Aus diesem Grunde ist das erfindungsgemäße Gerät so ausgebildet, daß es stets den aktuellen Stand anzeigt. Dies wird dadurch erreicht, daß beim Überschreiten der Anzahl der zu berücksichtigenden Meßwerte beim Eintreffen eines "neuen" Meßwertes der jeweils "älteste" Meßwert aus dem Histogramm herausgenommen wird. Nach jedem Meßwert zeigt die grafische Darstellung daher den aktuellen Stand.

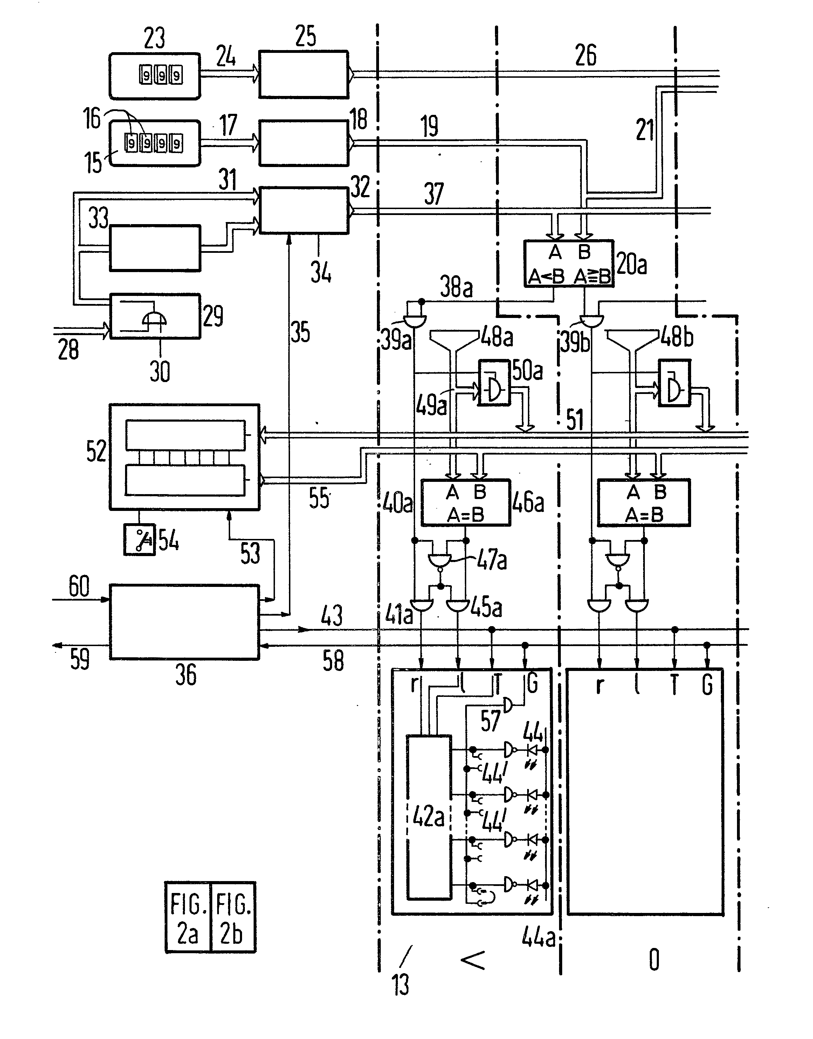

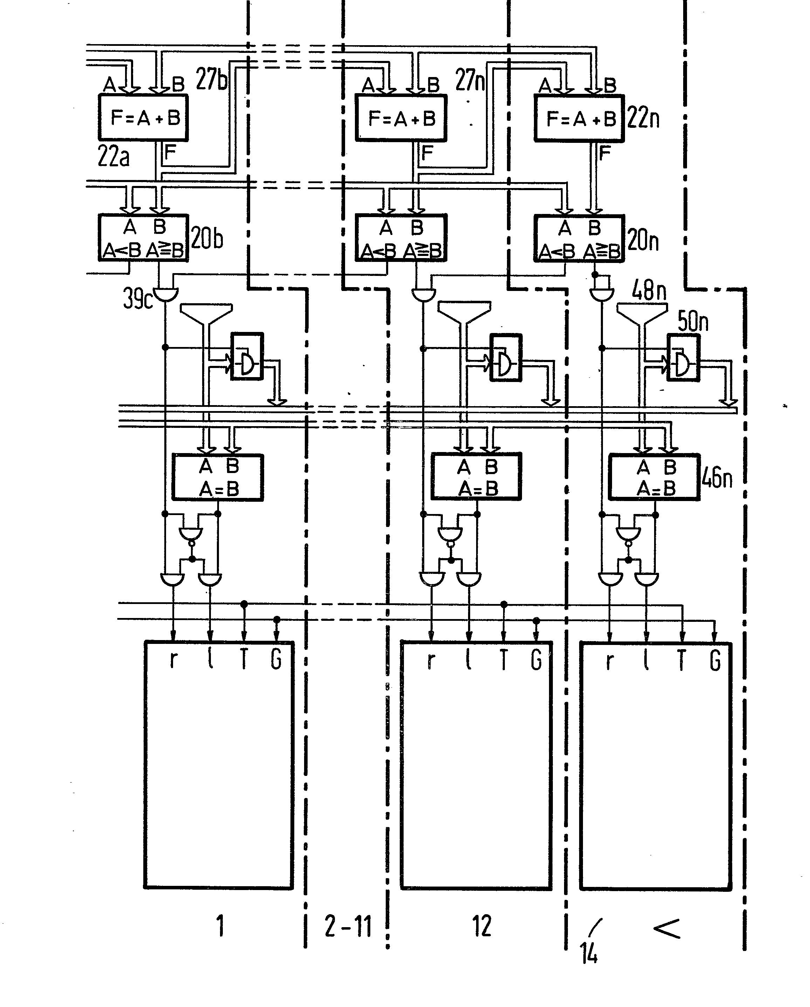

Figur 2 zeigt ein Blockschaltbild eines Anzeigegerätes für Häufigkeitsverteilungen. Wie in Figur 1 dargestellt, sind 13 Klassenintervalle 0 bis 12 vorgesehen, sowie zwei den Bereichen 13 und 14 zugeordnete Klassen zur Anzeige der Werte, die nicht in die Klassen 0 bis 12 fallen. Die Zahl der Klassen 0 bis 12 sowie die beiden Klassen 13 und 14 sind schaltungsmäßig festgelegt. Vorzugsweise ist die Schaltung jeder Klasse 0 bis 14 auf einer Steckkarte angeordnet, so daß die Klassenzahl durch Hinzufügen einer weiteren Steckkarte um eine Klasse erweitert werden kann oder, wenn eine Karte, z.B. die Karte der Klasse 12, herausgezogen wird, wird die Klassenzahl um eins vermindert. In diesem Fall schließt sich dann an die Klasse 11 unmittelbar die Klasse 14. Die Schaltungen der Klassen 1 bis 12 sind praktisch identisch und die Schaltung der Klasse 14 unterscheidet sich von diesen nur geringfügig. Die Klassen 0 und 13 unterscheiden sich von den übrigen Klassen 1 bis 12 lediglich durch die Art der Klassierung. Durch einen Digitalschalter 15 wird der Klassenanfang praktisch für alle Klassen 0 bis 14 vorgegeben. Wie zu ersehen ist, kann mit Hilfe von Handhaben 16 eine vierstellige Zahl eingestellt werden, und zwar von 1 bis 9999. Die mit Hilfe des Digitalschalters 15 eingestellte Zahl steht am Ausgang 17 im BCD-Code an. Da die Weiterverarbeitung im Binär-Code erfolgt, ist ein BCD-Binär-Umsetzer 18 vorgesehen, an dessen Ausgang ein Datenbus 19 angeschlossen ist, der einerseits mit einem Eingang B eines Komparators 20a und andererseits über einen Datenbus 21 mit dem Eingang A einer Addierstufe 22a in Verbindung steht.

Über einen weiteren Digitalschalter 23 kann die Klassenbreite eingestellt werden, und zwar von 0 bis 999. Über einen Ausgang 24 wird die im BCD-Code ausgegebene Ziffer einem BCD-Binär-Umsetzer 25 zugeführt, an dessen Ausgang ein Datenbus 26 angeschlossen ist, der mit den Eingängen B der Addierstufen 22a bis 22n in Verbindung steht. Am Ausgang F der Addierstufen 22a bis 22n steht dann die Summe A + B an. Über je einen Datenbus 27b bis 27n werden den folgenden Addierstufen 22b bis 22n die Klassenanfänge der vorhergehenden Stufen vorgegeben.

Über einen Dateneingang 28 werden die zu registrierenden Meßwerte dem Gerät zugeführt. Diese Meßwerte können im BCD- oder Binär-Code eingegeben werden, und zwar sowohl in positiver als auch in negativer Logik. Aus diesem Grunde ist eine Exklusiv-ODER-Schaltung 29 vorgesehen, die einen Setz-Eingang 30 aufweist. Wird an dem Eingang 30 ein L-Signal angelegt, so gelangt die positive Logik und beim Anlegen eines H-Signals die negative Logik zur Wirkung. Ein Ausgang der Exklusiv-ODER-Schaltung 29 ist über einen Datenbus 31 unmittelbar mit einem Datenselektor 32 verbunden und einmal mittelbar über einen BCD-Binär-Umsetzer 33, damit die Daten sowohl im BCD- oder Binär-Code eingegeben werden können. Über einen Setz-Eingang 34 wird der Datenselektor 32 aktiviert, und zwar ist mit einem H-Signal der BCD-Code und mit einem L-Signal der Binär-Code wirksam. In dem Datenelektor 32 wird also der am Eingang 28 anstehende Meßwert im Binär-Code gespeichert. Über eine Taktleitung 35, welche mit einer Steuereinrichtung 36 in Verbindung steht, wird der im Datenselektor gespeicherte Meßwert auf einen Datenbus 37 gegeben, welcher mit den Eingängen A der Komparatoren 20a bis 20n in Verbindung steht. Jeder der Komparatoren besitzt zwei Ausgänge A $<$ B und A $\geqq$ B. Der Ausgang A $<$ B des Komparators 20a erhält dann Signal, wenn der über Eingang 28 anstehende Meßwert kleiner als der mit Hilfe des Digitalschalters 15 eingestellte Klassenanfang ist. Da dieser Wert ebenfalls zur Anzeige gebracht werden soll, und zwar in der Klasse 13, ist der Ausgang A < B des Komparators 20a über eine Leitung 38a und UND-Gatter 39a sowie Leitung 40a und UND-Gatter 41a mit einem Eingang r eines Schieberegisters 42a verbunden. Durch einen Taktimpuls über eine Leitung 43 auf einen Takteingang T des Schieberegisters 42a wird dieses Signal in diesem gespeichert und beispielsweise mit Hilfe einer Diode 44 einer Leucht-Diodenreihe 44a angezeigt. Das Schieberegister 42a besitzt einen weiteren Eingang 1, mit dem die Schieberichtung umgekehrt werden kann, falls der Ausgang eines weiteren UND-Gatters 45a Signal führt. Dieses UND-Gatter 45a ist mit einem Eingang mit dem Ausgang eines weiteren Komparators 46a verbunden, welcher nur in einem besonderen Fall Signal abgibt, was weiter unten näher erläutert wird. Über ein NAND-Gatter 47a stehen die Ausgänge des UND-Gatters 39a und des Komparators 46a mit den beiden Eingängen der UND-Gatter 41a und 45a in Verbindung. Da die Eingänge des NAND-Gatters 47a H- bzw. L-Signal führen, führt auch sein Ausgang H-Signal. Da die Leitung 40a ebenfalls H-Signal führt, ist das UND-Gatter 41a durchlässig, während das UND-Gatter 45a gesperrt ist.

Jeder Klasse ist eine Adressiereinrichtung 48a bis 48n zugeordnet, die einerseits über einen Datenbus 49a mit einem Eingang A des Komparators 46a und andererseits über ein Gatter 50a und einem Adreßbus 51 mit einem Speicher 52 in Verbindung steht, der im vorliegenden Fall ein Schieberegister ist. Sobald also die Leitung 40a H-Signal erhält, wird das Gatter 50a freigegeben und damit die Adresse der Adressiereinrichtung 48a in das Schieberegister 52 eingegeben. Das Schieberegister 52 wird über eine Leitung 53 von der Steuerung 36 getaktet. Das Schieberegister 52 kann vorzugsweise stufenweise auf bestimmte Werte eingestellt werden, und zwar mit Hilfe eines in der Zeichnung schematisch dargestellten Schalters 54, welcher vorzugsweise als Dreh schalter ausgeführt wird. Mit Hilfe dieses Schalters 54 kann die Anzahl der angezeigten Meßwerte vorgewählt werden. Wie Figur 4 zeigt, ist der Meßbereich von 25 bis 150 in Stufen von 25 einstellbar. In einer Stellung werden sämtliche eintreffende Meßwerte registriert und angezeigt. Bei Übernahme eines Meßwertes durch einen Takt der Steuerung 36 wird also das Schieberegister 52 um einen Schritt fortgeschaltet.

Der Ausgang des Schieberegisters 52 ist mit einem Adreßbus 55 verbunden, der wiederum mit den Eingängen B der Komparatoren 46a bis 46n verbunden ist. Nach Durchlauf der zuerst eingespeicherten Adresse durch das Schieberegister 52 erscheint dieser Wert beim Eintreffen eines neuen Meßwertes am Adreßbus 55. Wird durch den neuen Wert zufälligerweise wiederum die Klasse 13 angesteuert, dh. der Meßwert liegt unterhalb des Klassenanfanges, so erhalten die Eingänge A und B des Komparators 46a gleiches Signal, d.h. A ist gleich B, so daß der Ausgang des Komparators 46a H-Signal führt, was zur Folge hat, daß beide Eingänge des NAND-Gatters 47a H-Signal erhalten; da in diesem Falle der Ausgang des NAND-Gatters L-Signal führt, sind die beiden UND-Gatter 41a und 45a gesperrt, so daß sich am Zustand dieses Schieberegisters 42a nichts ändert.

Ist aber der bei 28 eingegebene Meßwert größer als der Klassenanfang, so führt in diesem Falle die Leitung 40a L-Signal, während der Ausgang des Komparators 46a H-Signal führt. Demzufolge wird nur das UND-Gatter 45a angesteuert und damit Signal auf den Eingang 1 des Schieberegisters 42a gegeben, wodurch der Speicherinhalt des Schieberegisters 42a um einen Wert herabgesetzt wird. In entsprechender Weise wird aber auch die Anzeige korrigiert.

Die Ausgänge F der Addierstufen 22a bis 22n bestimmen also den Anfang jeder Klasse 0 bis 12. Die Komparatoren 20a bis 20n vergleichen diese Werte mit dem jeweiligen Meßwert auf dem Datenbus 37. Ist also beispielsweise der durch das Addierwerk 22a vorgegebene Wert größer als der auf dem Bus 37 vorgegebene, so führt der Ausgang A $<$ B H-Signal und aktiviert das UND-Gatter 39b der nächstniedrigen Klasse. Ist hingegen der durch den Datenbus 37 vorgegebene Wert größer oder gleich dem durch die Addierstufe 22a vorgegebenen Wert, so erhält der Ausgang A $\geqq$ B H-Signal und aktiviert das UND-Gatter 39c, welches aber erst dann wirksam wird, wenn von der nächsthöheren Klasse Signal gegeben wird, daß der Meßwert nicht in die nächsthöhere Klasse fällt.

Wie die Anzeige der Klasse 13 zeigt, sind jeder Diode 44 der Leuchtdiodenreihe 44a zwei Buchsen 44' zur Sollwertvorgabe zugeordnet. Die eine Buchse ist unmittelbar mit der der Diode 44 zugeordneten Leitung verbunden, während die andere Buchse über ein Gatter 57 mit einem Ausgang G des Schieberegisters 42a in Verbindung steht. Der Ausgang G ist über eine Leitung 58 mit der Steuerung 36 verbunden. Die Leitung 58 erhält Signal, sobald der vorgewählte Wert erreicht ist. Über eine Leitung 59 kann ein Signal abgenommen werden, das die Aussage macht, daß ein vorgewählter Grenzwert überschritten wurde. Mit 60 ist der Takteingang für die Steuereinrichtung 36 bezeichnet.

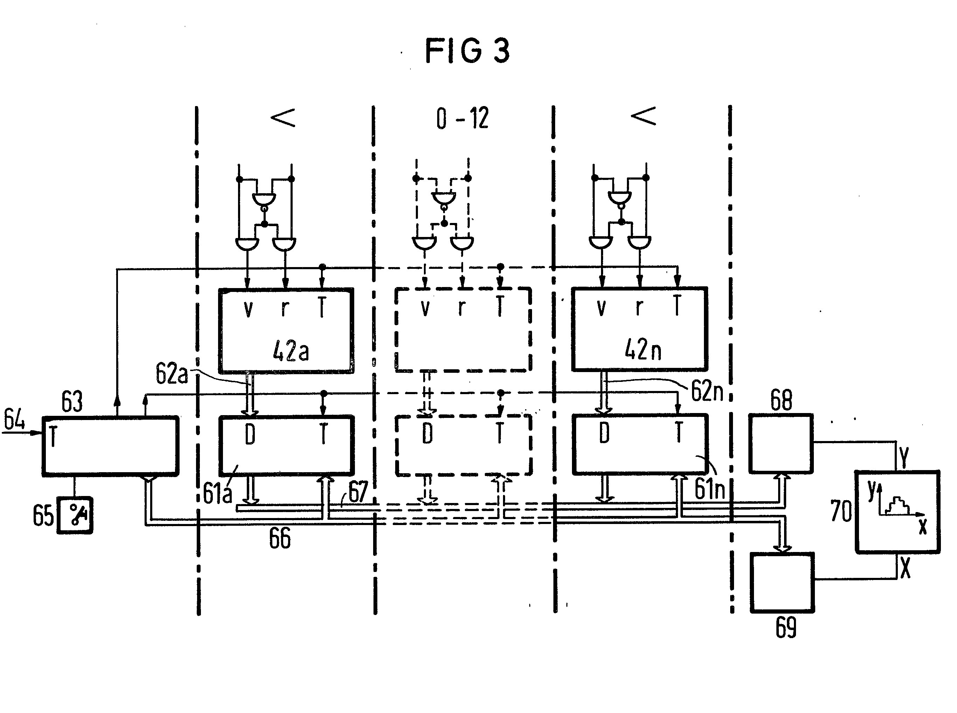

Figur 3 zeigt ein Blockschaltbild für einen Schreiberanschluß, wobei gleichbleibende Teile mit gleichen Bezugsziffern versehen sind. An jedem Schieberegister 42a bis 42n gemäß Fig. 2   ist ein Speicher 61a bis 61n angeschlossen, wobei über je einen Datenbus 62a bis 62n die Daten übertragen werden, wenn über einen Takteingang T, welcher von einer Steuerung 63 kommt, ein Abrufsignal gegeben wird. Mit 64 ist ein Takteingang für die Steuerung 63 bezeichnet. Über einen Eingang der Steuerung 63 kann mit Hilfe eines Tastschalters 65 die Datenausgabe gestartet werden. Über einen Adreßbus 66 werden die einzelnen Speicher 61a bis 61n angesteuert und über einen Datenbus 67 die eingespeicherten Daten ausgegeben. Mit Hilfe von Digital-Analog-Umsetzern 68 und 69 werden die Adressen und die Daten auf einen X/Y-Schreiber 70 gegeben, der das eingespeicherte Histogramm aufzeichnet. Diese Aufzeichnung entspricht dem aktuellen Stand nach jedem Meßwert.

Figur 4 zeigt das Anzeigegerät, wobei in einem Anzeigefeld 71 die einzelnen Diodenreihen 44a bis 44n angeordnet sind. Mit 72 ist eine Signallampe bezeichnet, die dann leuchtet, wenn der Takt vorhanden ist. Eine weitere Signallampe 73 zeigt den Überlauf des Dateneingangs 28 an und eine Lampe 74 zeigt an, wenn ein Grenzwert einer der Klassen überschritten ist. Mit einer Taste 75 können sämtliche Speicher gelöscht werden. Neben den einzelnen Dioden 44 der Diodenreihen 44a bis 44n sind die entsprechenden Buchsen 44' für die Einstellung des Grenzwertes dargestellt. Mit 76 ist ein Ein-Aus-Schalter zur Unterbrechung des Takts und mit 77 ein Netzschalter bezeichnet.

Anstelle des Schieberegisters 52 kann ein diesem äquivalentes Mittel, beispielsweise ein prozessorgesteuerter Speicher verwendet werden. Bei dem Ausführungsbeispiel werden in dem Speicher 52 die Adressen der Klassen 0 - 14 abgespeichert. Es könnten aber auch unmittelbar die Meßwerte abgespeichert werden, was jedoch den Aufwand für das Schieberegister beträchtlich erhöhen würde.

7 Patentansprüche
4 Figuren

Patentansprüche

1. Gerät zur Anzeige an Häufigkeitsverteilungen von Meßwerten oder dgl. über einen einstellbaren Meßbereich, bei dem der Meßbereich in gleich große Abschnitte (Klassen) unterteilt ist und die Abschnitte fortlaufend nummieriert sind, wobei die Anzahl der in jede Klasse fallenden Meßwerte gespeichert und angezeigt wird und fallweise ausgebbar ist, dadurch g e k e n n z e i c h - n e t , daß die Anzahl der gesamt anzuzeigenden Meßwerte vorwählbar ist und daß bei jeder Überschreitung der vorgewählten Anzahl durch jeden neuen Meßwert der in der Reihenfolge älteste Meßwert löschbar ist.

2. Gerät nach Anspruch 1, dadurch g e k e n n z e i c h - n e t , daß die Anzahl der gesamt anzuzeigenden Meßwerte mit Hilfe eines einstellbaren Speichers (52) vorgebbar ist, in welchem die Adressen (48a...48n) der Klassen (0 ..14) oder die Meßwerte in der Reihenfolge ihrer Ansteuerung bzw. ihres Eintreffens abgespeichert sind.

3. Gerät nach Anspruch 2, dadurch g e k e n n - z e i c h n e t , daß bei vollem Speicher (52) die Adresse der durch den nächstfolgenden Meßwert angesteuerten Klasse in den Speicher (52) übernommen und gleichzeitig die dem ältesten Meßwert zugeordnete Klassenadresse ausgegeben wird, welche den Inhalt des dieser Klasse (0...14) zugeordneten Speichers (42a ... 42n) korrigiert.

4. Gerät nach Anspruch 2 oder 3, dadurch g e k e n n - z e i c h n e t ,daß der Speicher (52) für die Adressen (48a...48n) ein Schieberegister ist, das vom Meßtakt - impuls getaktet ist.

5. Gerät nach einem der Ansprüche 1 bis 4, dadurch g e k e n n z e i c h n e t , daß die den einzelnen Klassen (0 bis 14) zugeordneten Zähler (42a bis 42n) vor- und rückwärts arbeitende Schieberegister sind, deren Stand mit Hilfe von Leuchtdiodenzeilen (44a bis 44n) nach Art eines Histogramms (H) anzeigbar ist.

6. Gerät nach einem der Ansprüche 1 bis 5, dadurch g e k e n n z e i c h n e t , daß mit Hilfe von Schwellwertgebern der Sollwert einer statistischen Verteilung vorgebbar ist.

7. Gerät nach Anspruch 6, dadurch g e k e n n - z e i c h n e t , daß die Schwellwertgeber in Buchsen (44') neben den Dioden (44) der einer jeden Klasse zugeordneten Leuchtdiodenzeile (44a bis 44n) einsteckbar sind.

0017991

## FIG1

## FIG 4

FIG 2a    2/4

0017991

FIG. 2a | FIG. 2b

FIG 2b   3/4

0017991

FIG 3